# EUROPEAN PATENT SPECIFICATION

(11) **EP 3 518 362 B1**
(45) Date of publication and mention of the grant of the patent: **15.06.2022**
(21) Application number: 19151911.5
(22) Date of filing: 15.01.2019
(51) Int. Cl.: H02H 3/00, H02H 3/093

(54) **ELECTRICAL POWER SUPPLY SYSTEM FOR BUILDINGS AND ELECTRICAL LOAD PROTECTION DEVICE FOR USE IN SAME**
STROMVERSORGUNGSSYSTEM FÜR GEBÄUDE UND SCHUTZVORRICHTUNG FÜR ELEKTRISCHE LAST ZUR VERWENDUNG DARIN
SYSTÈME D'ALIMENTATION ÉLECTRIQUE POUR BÂTIMENTS ET DISPOSITIF DE PROTECTION DE CHARGE ÉLECTRIQUE DESTINÉ À ÊTRE UTILISÉ EN SON SEIN

(30) Priority: 22.01.2018 GB 201800985
(43) Date of publication of application: 31.07.2019
(73) Proprietor: Camlin Technologies Limited, Lisburn, Antrim BT28 2EX (GB)
(72) Inventor: Cunningham, John, Cookstown, County Tyrone, BT80 8JG (GB); Beasant, Robert, Lisburn, County Antrim, BT28 2EX (GB); Cunningham, Peter, Lisburn, County Antrim, BT28 2EX (GB)
(74) Representative: FRKelly

(56) References cited:
- JP-A- H1 042 452
- JP-A- 2002 125 312
- US-A1- 2008 165 461
- US-A1- 2013 270 908

## Description

### Field of the Invention

This invention relates to electrical power supply systems for buildings, especially multi-occupancy buildings. The invention relates in particular to load protection of Rising and Lateral Mains (RLM). The invention also relates to electrical load protection devices.

### Background to the Invention

In designing an electrical circuit the rating of the wiring is generally determined by the maximum anticipated load. The rating of the wiring in turn determines a safe upper limit for the setting of the protection. It is also highly undesirable for the load to exceed the protection setting for any significant time as this could lead to unplanned tripping of the load. In circuits where the total load seen by the main protection device comprises many smaller, independent loads, such as a typical low voltage distribution feeder supplying domestic housing, flats or tower blocks, the fluctuation of the total load inevitably means that much of the time the actual load will be significantly lower than the maximum load and even further below the protection setting. As a result, it is possible that a fault occurs in some section of the circuit that does not draw enough fault current to operate the protection device. Therefore, a potentially dangerous arcing fault might not be cleared quickly, increasing the risk of fire.

An electrical power supply system for a multi-occupancy building typically comprises the following parts: one or more main feed electrical power cable from a public electrical distribution network into the building; a network of internal electrical power cables to each floor of the building, and along each floor terminating at multiple supply points (e.g. at each apartment or flat) - this part of electrical supply system is commonly known as the Rising and Lateral Mains (RLM), or rising electrical mains; and internal wiring at each supply point, e.g. in each apartment.

The multi-occupancy building may be a low, medium or high rise building typically comprising two or more floors, for example an apartment block, flats, tower block, car park, or hospital.

The main feed electrical power cable (or feeder) typically comprises a three phase, underground LV (e.g. 420Volt) main power cable. The feeder(s) usually terminate at ground floor level, for example in a power distribution room of the building. The Rising and Lateral Mains (RLM) provides low voltage (LV) electrical power to the multi-occupancy building from the main feeder(s). The RLM typically comprises one or more riser for supplying the power up to each floor of the building. A riser comprises one or more suitable conductor, e.g. an LV cable or bus-bar, and extends upwardly from the main feeder. At each floor, the RLM includes cable(s) for providing power to the or each supply point on that floor. A distribution board is typically provided at each floor for connecting the riser to the lateral cable(s). Risers usually carry three phase power, while the lateral cables may carry single phase power.

More generally, an RLM may be said to comprise a three phase cable or bus-bar, not laid in the ground, which runs within or attached to the outside of a multiple occupancy building to which a number of individual electrical services (or supply points) are connected, usually via a distribution board. Typically the cables or bus-bar of an RLM run for more than 3m vertically, and/or more than 3 m horizontally. RLMs may be classified as either: "RLM House" - for two storey multi-occupancy buildings; "RLM Flat" - for three to five storey buildings; and "RLM Multi" - for buildings with more than five storeys.

Much of the cabling/conductors and connections that comprise the RLM are contained in ducting or service channels within or on the building. As this equipment deteriorates, there is a risk of an electrical fault occurring. Such faults can release significant amounts of energy leading to a risk of fire. However, the equipment is often inaccessible and so inspection of its condition can be difficult. Conventionally, RLM installations are monitored and protected by HRC (High Rupturing Capacity) fuses that are responsive to high levels of electrical current associated with faults. These fuses only operate when the electrical current exceeds the normal load current of the RLM which can be several hundred amps. As such, HRC fuses are of limited benefit in controlling the amount of energy released by a fault and hence the risk of fire.

Currently, the only means of assessing the condition of such RLM installations are: manual inspection in the ducting and other areas which is often hazardous and expensive; remote end electrical insulation resistance testing which is ineffective in detecting emerging faults; or thermal imaging of cables which has limited benefit particularly when the equipment is shielded in ducting.

It would be desirable to mitigate the problems outline above.

Document US2013 270908 A1 discloses a circuit breaker using a load profile.

### Summary of the Invention

A first aspect of the invention provides an electrical load protection device according to claim 1.

Preferably, said device is configured to select or create an initial trip characteristic to match said load profile. Advantageously, said device is configured to change said trip characteristic to match said load profile. Preferably, said device is configured to change said trip characteristic to match changes in load indicated in said load profile.

Advantageously, said device is configured to update said load profile using said measured load. Said device may be configured to change said trip characteristic to match the updated load profile.

Said trip characteristic may comprise a time-current trip characteristic specifying at least one current threshold value, said control unit being configured to cause said circuit breaker to open in response to the measured load current exceeding the at least one current threshold value. Said load profile typically comprises at least one representative load value, preferably at least one representative load value derived from measured load current. Said load profile may comprise a respective representative load value for each of a plurality of time periods. Said representative load value may represent a maximum expected load, conveniently a maximum expected load current. Said representative load value may represent a maximum expected load for the respective time period.

The respective representative load value is conveniently derived from a measured load current value for the respective time period, and/or from one or more measured load current value in respect of one or more other time period. The representative load value may be a power value.

Advantageously, said device is configured to select, create or change said trip characteristic to match said load profile by causing said at least one current threshold value to match a respective representative load value of the load profile.

Optionally, said trip characteristic comprises a current-step trip characteristic defines at least one current step having a respective magnitude, and wherein the control unit is configured to open the circuit breaker upon detection of a step increase in measured load current above the step magnitude. Said load profile may comprise at least one current-step magnitude value derived from the measured load current. Said load profile may comprise a respective current-step magnitude value for each of a plurality of time periods. Optionally, said current-step magnitude value represents a maximum expected current-step increase. Said current-step magnitude value may represent a maximum expected current-step increase for the respective time period. The respective current-step magnitude value may be derived from one or more current step increases for the respective time period detected from said measured load current, and/or in respect of one or more other time period.

In preferred embodiments, said device is configured to select, create or change said trip characteristic to match said load profile by causing said at least one current-step magnitude value of the trip characteristic to match a respective current-step magnitude value of the load profile.

From another aspect, the invention provides an electrical load protection method according to claim 14.

Another aspect of the invention provides an electrical power supply system comprising a Rising and Lateral Mains (RLM) installed in a building and connected to an AC electrical power supply, and at least one electrical load protection device connected between the RLM and the AC electrical power supply, wherein the, or each, electrical load protection device comprises: a circuit breaker operable between a closed state in which the RLM is connected to the power supply, and an open state in which the RLM is disconnected from the power supply; a current sensor for measuring load current drawn by the RLM from the supply; and a control unit configured to control the operation of the circuit breaker depending on the measured load current. Advantageously, said load protection device is a load protection device according to the first aspect of the invention, although this aspect of the invention may be used with other load protection devices, including conventional load protection devices.

Advantageously, the, or each, electrical load protection device includes a communications unit to allow communication with at least one remotely located device or system. Said communications unit may be configured to support receipt of control signals from said at least one remotely located device or system for controlling operation of the load protection device. Preferably, said communications unit is configured to support the transmission of data from the load protection device to said at least one remotely located device or system.

Preferred embodiments of the invention involve the use of at least one electrical load protection device to provide electrical protection, including Automatic Disconnection of Supply (ADS), for one or more RLM installation in a multi occupancy building.

Preferred embodiments of the invention offer one or more of the following benefits:
1. The location within the building of any emerging short circuit fault can be determined while it is still a low energy fault, i.e. before it releases enough energy to cause a fire;
2. In response to detection of a developing fault, the load protection device can be activated remotely to de-energise the RLM;
3. If a detected fault is at an early stage, a repair crew can be dispatched to carry out timely repairs;
4. Sensing of high frequency current characteristics allows measurement of the condition of the RLM installation, which may trigger early investigations and allows ranking of multiple RLMs to allow more effective direction of maintenance expenditure.

Advantageously, embodiments of the invention may provide enhanced protection based on customised and/or adjustable trip characteristics, and/or current step changes. This allows isolation of faults more quickly than a standard fuse. In particular, it is preferred that one or more trip characteristics are adjusted in response to detected or predicted load levels.

Preferred embodiments facilitate early detection of arcing activity within cables, highlighting potentially faulty or damaged assets (equipment) before the damage develops to a more dangerous level.

Other advantageous aspects of the invention will be apparent to those ordinarily skilled in the art upon review of the following description of a specific embodiment and with reference to the accompanying drawings.

### Brief Description of the Drawings

Embodiments of the invention are now described by way of example and with reference to the accompanying drawings in which like numerals are used to denote like parts and in which:
Figure 1 is a schematic view of a first electrical power supply system embodying a first aspect of the invention;
Figure 2 is a schematic view of a second electrical power supply system embodying the first aspect of the invention;
Figure 3 is a schematic view of a third electrical power supply system embodying the first aspect of the invention;
Figure 4 is a schematic view of a current load protection device embodying a second aspect of the invention and suitable for use in the first aspect of the invention;
Figures 5A to 5D show flow charts illustrating examples of the operation of the current load protection device; and
Figure 6 is a graph illustrating examples of fuse characteristic curves, plotting fuse time against current.

### Detailed Description of the Drawings

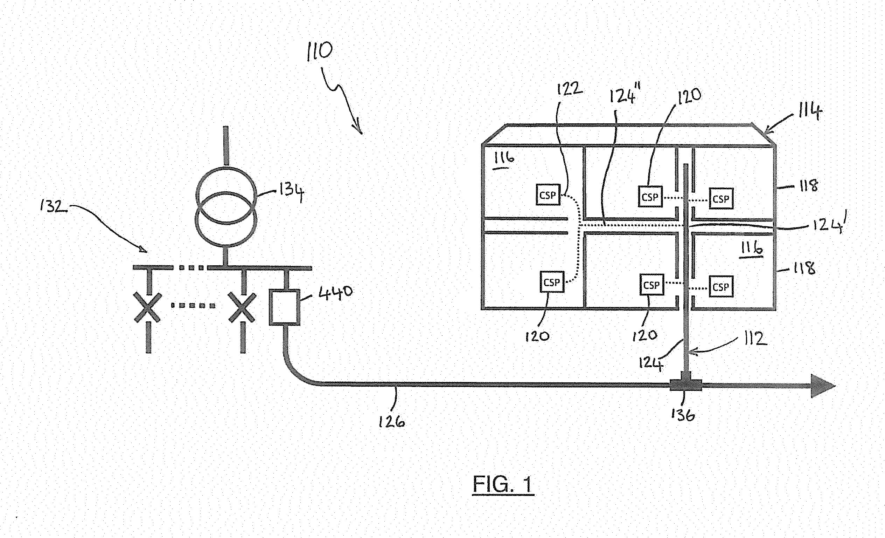

Figures 1 to 3 illustrate respective electrical power supply systems 110, 210, 310 embodying a first aspect of the invention. Each system 110, 210, 310 comprises a Rising and Lateral Mains (RLM) - which may also be referred to as a rising electrical mains - 112, 212, 312 installed on a building 114, 214, 314. The building 114, 214, 314 is typically a multi-occupancy building. A multi-occupancy building is a building having a plurality of accommodation units 116, 216, 316. Each accommodation unit 116, 216, 316 may for example be a separate household, e.g. a separate apartment or flat, or a separate office space, or a hospital ward. Typically, the building 114, 214, 314 has more than one floor 118, 218, 318, with one or more accommodation unit on each floor. By way of example, the building 114, 214, 314 may be an apartment block, block of flats, office block, tower block or hospital. Each accommodation unit 116, 216, 316 has a respective electrical power supply point 120, 220, 320 by which the electrical power supply system supplies electrical power to the accommodation unit. Typically, each supply point 120, 220, 320 is a customer supply point (CSP) associated with a respective customer of the distribution network operator (DNO) that provides electrical power via the system 110, 210, 310. Each supply point 120, 220, 320 typically comprises a service head, or cut-out (not shown), for connection to an electrical power service cable 122, 222, 322, and which usually comprises a fuse (not shown).

The RLM 112, 212, 312 comprises one or more electrical power conductor 124, 224, 324, usually comprising one or more electrical power cable and/or one or more bus-bar, that is not laid in the ground and which runs within or attached to the outside of the building 114, 214, 314 to provide electrical mains power to the supply points 120, 220, 320. The RLM 112, 212, 312 is connected to an electrical mains feeder 126, 226, 326, which is usually laid underground. Usually, the feeder 126, 226, 326 carries three phase AC electrical power, usually at low voltage (LV) level.

Typically, the RLM 112, 212, 312 includes at least one conductor 124', 224', 324', usually comprising one or more electrical power cable and/or one or more bus-bar and which may be referred to as a riser, that extends upwardly (usually, but not necessarily, vertically) from a connection point with the mains feeder 126, 226, 326 and extends to the, or each, floor 118, 218, 318 of the building 114, 214, 314. The connection point is typically located in an electrical distribution room (not shown) of the building. The, or each, riser 124', 224', 324' is usually located in a service channel or duct 128, 228, 328. In typical applications, the, or each, riser 124', 224', 324' carries three phase AC electrical power, usually at low voltage (LV) level.

The RLM 112, 212, 312 also comprises distribution conductors 124", 224", 324" (which may be referred to as laterals), usually comprising one or more electrical power cables, connecting each supply point 120, 220, 320 to the respective riser 124', 224', 324'. The distribution cables 124", 224", 324" usually carry single phase AC power to each supply point 120, 220, 320. A distribution board (not shown) is typically provided at each floor for connecting the riser 124', 224', 324' to the distribution cables 124", 224", 324". The, or each, riser 124', 224', 324' may be tapped-off at each floor using any suitable tap-off unit(s) (not shown).

The mains feeder 126, 226, 326, which typically comprises one or more electrical power cable, is connected to an electrical sub-station 132, 232, 332. In typical embodiments, the sub-station 132, 232, 332 includes a transformer 134, 234, 334 for transforming a medium voltage (MV) three phase AC power supply to a low voltage (LV) three phase AC supply (e.g. 11 kV to 230 V).

Figure 1 shows a first configuration in which the mains feeder 126 that supplies the RLM 112 of the building 114 is shared with one or more other load(s) (not shown), e.g. one or more other buildings, as part of a local power distribution network. To this end, the RLM 112 is connected to the feeder 126 by a three phase cable joint 136. In this configuration, the sub-station 132 may connected to one or more other mains feeders 126' for supplying power to other loads or networks. This configuration is particularly, but not exclusively, suitable for buildings with two to five floors, where the number of supply points is relatively low. A two storey building is shown in Figure 1 by way of example only.

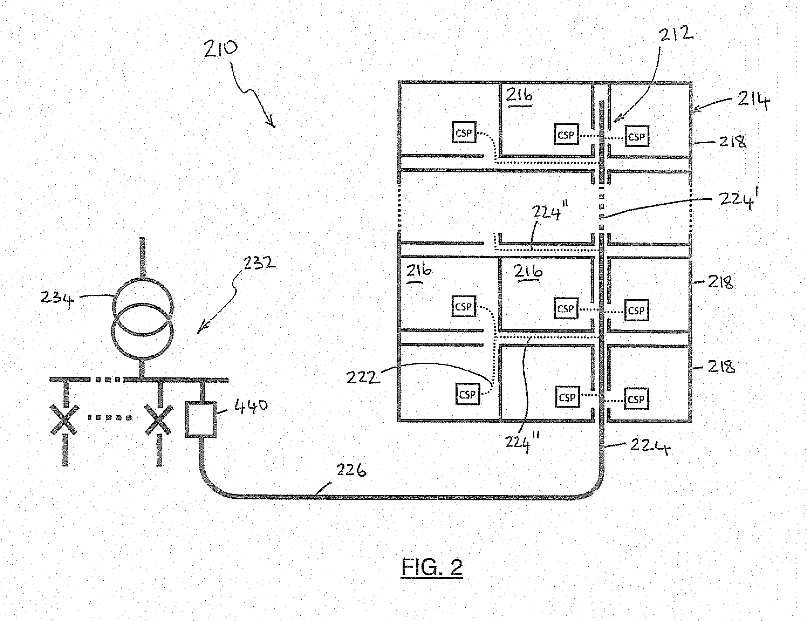

Figure 2 shows a second configuration in which the mains feeder 226 is a dedicated, i.e. not shared with a network or other load, feeder from the substation 232 to the RLM 232. In this configuration, the sub-station 232 may connected to one or more other mains feeders 226' for supplying power to other loads or networks. This configuration is particularly, but not exclusively, suited for buildings with more than two floors.

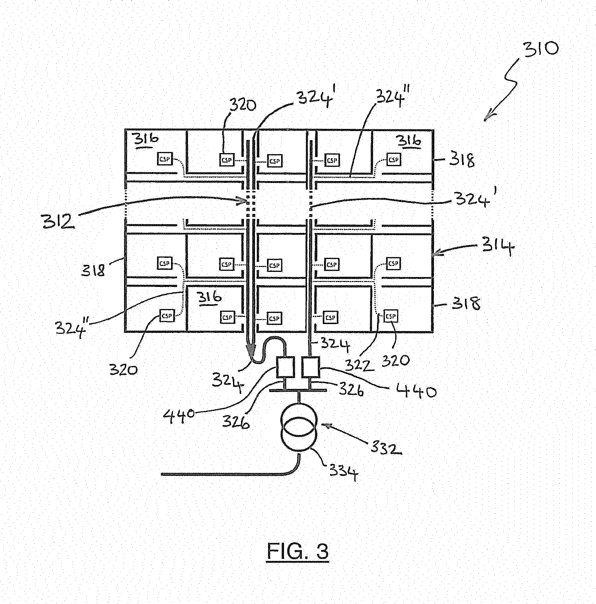

Figure 3 shows a third configuration in which the sub-station 332 is dedicated, i.e. not shared with a network or other load, to providing power to the, or each, RLM 312 of building 314 (the sub-station 332 may be provided in or adjacent the building). One or more feeders 326 may be provided from the sub-station 332 to the building 314, usually a respective feeder 326 for each RLM 312 of the building 314. This configuration is particularly, but not exclusively, suited to for buildings with five or more floors. Figure 3, two feeders 326 and two RLMs 312 are shown by way of example only.

Relatively large buildings may have more than one RLM, and it is preferred that each RLM is connected to a respective mains feeder. In alternative configurations, more than one mains feeder may supply a building irrespective of whether or not the sub-station is dedicated to the building. In

The electrical power supply system 110, 210, 310 includes at least one electrical load protection device 440 for providing electrical protection, including Automatic Disconnection of Supply (ADS), for the, or each, RLM 112, 212, 312 installed in the building 114, 214, 314, or more generally to an AC load to which it is connected. The device 440 may be of a type known as a recloser (or autorecloser), and in preferred embodiments is a single phase device, i.e. configured to operate with a single phase of an AC power supply.

In preferred embodiments, a respective device 440 is provided for each phase of the, or each, mains feeder 126, 226, 326 that supplies the building 114, 214, 314, the device 440 being connected in-line with the respective conductor(s) that supply the respective phase of the power supply. In the illustrated embodiments, three devices 440 are connected to each feeder 126, 226, 226, one device per phase. Each device 440 may be connected to the system 110, 210, 310 at any location that allows it to selectably connect or disconnect the respective RLM 112, 212, 312 to or from the mains power supply provided by the respective feeder 126, 226, 326. In preferred embodiments, each device 440 is connected to the respective feeder 126, 226, 326 at the sub-station 132, 232, 332, for example in place of a conventional fuse, and is operable to connect the feeder to, or disconnect the feeder from, the mains power supply provided by the transformer 134, 234, 334. Alternatively, each device 440 may be connected to the respective feeder 126, 226, 326 at a suitable location within the building 114, 214, 314, e.g. at the connection point between the feeder 126, 226, 336 and the RLM 112, 212, 312, or elsewhere in the circuit of which the feeder is part (e.g. in a link box), so that it is operable to selectably connect the RLM to, or disconnect the RLM from, the respective feeder 126, 226, 326. Advantageously, the device 440 is operable remotely from an external device or system (not shown), such as a Network Management System), via a wired and/or wireless telecommunications link.

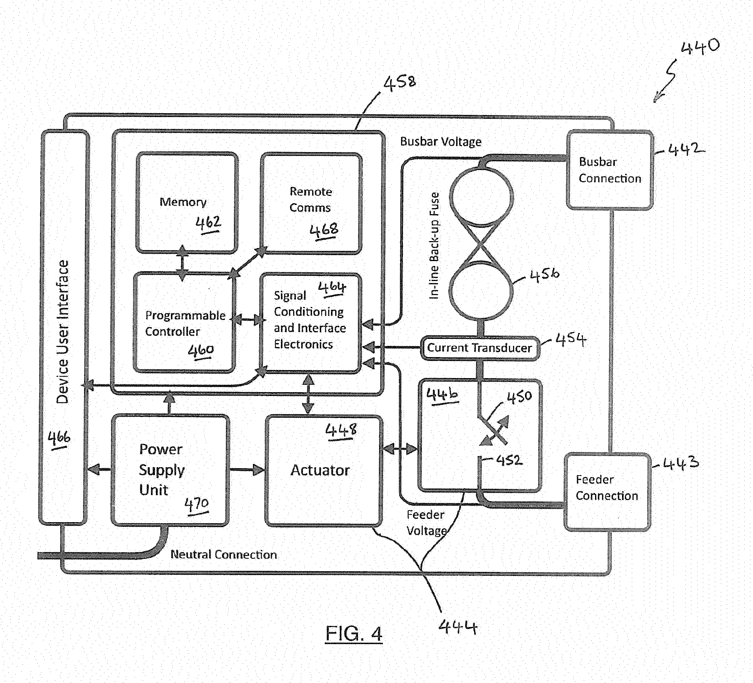

Figure 4 shows a preferred embodiment of the load protection device 440. The device 440 has first and second electrical terminals 442, 443 for connecting the device in line with the relevant circuit.

A circuit breaker 444 is connected between the terminals 442, 443 and is operable to make or break an electrical connection between the terminals 442, 443. The circuit breaker 444 comprises a switching unit 446 and an actuator 448 for operating the switching unit. Typically, the switching unit 446 has a movable contact 450 and a fixed contact 452, the movable contact 450 being movable (by the actuator 448) between a closed state in which the contacts 450, 452 make the electrical connection between the terminals 442, 443, and an open state in which the contacts 450, 452 break the electrical connection between the terminals 442, 443. In preferred embodiments, the switching unit 446 comprises a vacuum interrupter, in which case the circuit breaker 444 may be said to comprise a vacuum circuit breaker (VCB). The actuator 448 may take any convenient known form, e.g. a bellows actuator or a piezo-electric actuator. More generally, any conventional type of circuit breaker may be used, particularly low voltage (LV) circuit breakers for preferred applications.

The device 440 may include a current sensor 454 for monitoring current flowing between the terminals 442, 443. Any convention current transducer may conveniently provided as the current sensor 454. In alternative embodiments, the device 440 may be connected to an external current sensor (not shown) for monitoring current in the circuit to which the device is connected. In any case, the current sensor measures load current that is drawn by the load being protected from the supply to which the device 440 connects it. In the present example the load is the RLM 112, 212, 312 and the supply is provided by the substation 132, 232, 332.

Optionally, a fuse 456 may be provided in-line between the terminals 442, 443. The fuse 456 is provided as a back-up, being rated to rupture in the event that the circuit breaker 444 does not open when required.

A control unit 458 is provided for operating the circuit breaker 444 between its open and closed states. The preferred control unit 458 is configured to operate the circuit breaker 444 at least depending on one or more characteristic of the current monitored by the current sensor 454 (or an external current sensor as applicable). To this end the control unit 458 receives a sensed current input signal from the current sensor 454. In one mode of operation, the control unit 458 may be configured to open the circuit breaker 444 in response to detection of current above a threshold level (overcurrent). In preferred embodiments, the control unit 458 is configured to operate the circuit breaker 444 by evaluating any one or more of a plurality of inputs received by the control unit 458 during use. The inputs may include any one or more of: current level, transient current events, voltage level detected at either or both terminals 442, 443, transient voltage events detected at either or both terminals 442, 443, data received from a remote monitoring device or system (not shown). The control unit 458 may evaluate any one or more input instantaneously and/or over a period of time in determining how to operate the circuit breaker, and in particular when to open the circuit breaker, and may operate the circuit breaker 444 instantaneously in response to one or more input, or may operate the circuit breaker 444 in response to evaluation of input(s) over a period of time (e.g. hours, days, weeks or months). By way of example, the voltage at terminals 442, 443 may be measured with respect to a neutral connection, using any convention voltage measuring means, e.g. using one or more resistor based voltage-divider circuit and an analogue to digital converter.

In preferred embodiments, the load protection device 440 monitors load by monitoring the load current drawn by the load (i.e. by the RLM in the present example). In alternative embodiments, the device 440 may be configured to monitor load by monitoring electrical power, e.g. real and/or reactive power, or apparent power. Real power may be derived from the instantaneous product of the load current and the voltage across the load. These instantaneous values can be averaged in any convenient way, usually by means of a root mean square applied over one or more half cycles or cycles at the nominal frequency. Apparent power may be calculated by, for example, taking the R.M.S. of voltage and current first, then multiplying these two averaged values. A measurement of power can be derived from V x I, I^2 x R or V^2 \ R, where V is the voltage, I is the current and R is the resistance. In this case, since the load impedance is not known and is changing, any power calculation depends on a current measurement. One advantage of using power as a metric is that the direction of power flow can then be measured.

The control unit 458 includes a programmable controller 460 programmed to control the operation of the control unit 458. The controller 460 may take any suitable form, for example comprising one or more processor programmed to perform the functions of the method or components as described herein. The processor(s) may be a hardware device for executing software (including firmware), particularly software stored in memory. The processor(s) can be any custom made or commercially available processor, a central processing unit (CPU), a PLC, an auxiliary processor among several processors associated with a computer, a semiconductor based microprocessor (e.g. in the form of a microchip or chip set), a macroprocessor, or generally any device for executing software instructions, an FPGA or artificial intelligence hardware.

The control unit 458 includes memory 462 for use by the controller 460, e.g. for data storage and retrieval, and for storing executable software. The memory 462 can include, as required, any one or a combination of volatile memory elements (e.g., random access memory (RAM, such as DRAM, SRAM, SDRAM, etc.)) and non-volatile memory elements (e.g., ROM, hard drive, tape, CDROM, etc.). The software in memory may include one or more separate programs.

The control unit 458 typically includes electronic circuitry 464 for processing signals received by the control unit 458 during use into a form suitable for use by the controller 460, and processing control signals for sending to the actuator. The electronic circuitry 464 may also include circuitry for interfacing between the controller 460 and a device user interface 466, which is preferably provided. The device user interface 466 may take any conventional form, for example comprising means for allowing a user to program, operate and/or monitor the device 440.

In preferred embodiments, the control unit 458 includes a communications unit 468 to allow communication with one or more external or remote devices or systems (not shown). The communications unit 468 may comprise any conventional hardware and/or software, as applicable, to support one or more wired and/or wireless communications links, the type(s) and configuration of which may vary to suit the application.

In preferred embodiments, the communications unit 468 is configured to support the receipt of control signals from one or more remote device or system, e.g. a Network Management System (not shown) for controlling the operation of the device 440. Such control signals may be communicated to the controller 460, in response to which the controller 460 controls the operation of the device 440 accordingly. For example, in the event of an alarm or other event, the DNO (distribution network operator) may decide that it would be prudent to make an outage and investigate the cause of an anomaly. The device 440 can be remotely operated to trip, or open, prior to DNO staff arrival on site.

The device 440 may also receive data via the communications unit 468, for example data indicating any one or more of: time of day, date, weather, public holidays. Optionally, the device 440, e.g. in the control unit, includes a real time clock (RTC) function and preferably also a calendar function, and/or is connected to a suitable time and/or calendar source such as the internet or UTP.

The communications unit 468 preferably supports the transmission of data from the device 440 to one or more remote device or system, e.g. a Network Management System. The device 440 may transmit any measurements that it has made (e.g. relating to load current and/or voltage) and/or data relating to any analysis that the device 440 has made in response to measurement(s) that it has taken, and/or any alarm signals that it deems appropriate in response to measurement(s) that it has taken or analysis that it has made. In response to such transmissions, the remote system may send one or more control signals to the device 440, for example to trip the circuit breaker 444.

The communications unit 468 may also be configured to support communication between the device 440 and one or more other like devices (e.g. installed in the circuits for the other phases of the same power supply), so that, for example, if one device 440 of one phase trips, the other devices 440 for the other phases may be caused to trip.

A power supply unit 470 is provided for supplying electrical power to the various components of the device 440 as required.

The load protection device 440 is configured, or programmed, to operate the circuit breaker 444, and in particular to open the circuit breaker 444, in accordance with one or more trip characteristics, including at least one time-current trip characteristic. A time-current trip characteristic specifies when the circuit breaker is opened in response to detection of over-current, i.e. absolute current level above one or more threshold value. The time-current trip characteristic specifies one or more current threshold value. The trip characteristic typically also specifies any delay that is to be implemented before tripping the circuit breaker in response to detection of current at a level above the, or each, threshold value. The respective delay may be zero or non-zero, and may be of fixed length or of variable length. For example, the length of delay may vary depending on the level of detected current (typically reducing with increased current). Therefore, the time-current trip characteristic may include a delay profile for the, or each, threshold value stipulating when the circuit breaker is to trip when current levels above the respective threshold value are detected. Where there is more than one threshold value, the respective delay profile for each threshold value may apply for current levels between the respective threshold value and the next (higher) threshold value.

Typically, the or each time-current trip characteristic specifies a minimum current threshold value below which the circuit breaker does not trip, i.e. remains closed, and above which the circuit breaker trips, i.e. opens. Typically, the time-current trip characteristic specifies a non-zero trip delay above the minimum current threshold. The length of the delay may be fixed or may decrease with increasing current level above the minimum threshold value. Alternatively, or in addition, the time-current trip characteristic may specify a maximum current level threshold value above which the circuit breaker is to trip instantaneously, i.e. a delay value of zero. Where the time-current trip characteristic includes both a minimum and maximum current threshold value, the maximum threshold value is higher than the minimum threshold value.

Optionally, one or more supported trip characteristic may specify when the load protection device is to generate an alarm signal in response to detection of current at a level above one or more alarm current threshold value. The, or each, alarm current threshold value may be the same as a respective trip current threshold values, or may be different, e.g. at a desired level below a respective trip threshold value. For example, the trip characteristic may stipulate that an alarm is generated when the respective alarm current threshold value is exceeded, and/or during a non-zero delay following a trip threshold being exceeded but before the circuit breaker being tripped.

In preferred embodiments, the load protection device 440 is configurable to select, and preferably to change, the time-current trip characteristic that it implements. Changing the trip-current characteristic may involve replacing a currently implemented time-current trip characteristic with another, different, time-current trip characteristic, or adjusting one or more aspect of the currently implemented time-current trip characteristic (for example changing one or more current threshold value, and/or changing one or more delay profile associated with one or more current threshold value).

To this end, the control unit 458 may be provided with data representing a plurality of time-current trip characteristics, for example being stored in memory 462, any one of which may be selected by, or otherwise provided to, the controller 460 for implementation. The time-current trip characteristics may be pre-programmed in the device 440 (e.g. at the time of installation and/or via the device user interface 466), and/or may be provided to the device 440 via the communications unit 468, and/or may be created by the control unit 458 during use. Optionally, the control unit 458 is configured to adjust one or more aspect of any one or more of the time-current trip characteristics supported by the device 440. Alternatively, or in addition, the control unit 458 may be programmed to create time-current trip characteristics to suit the application, and in particular to suit the measured or predicted load.

In preferred embodiments, the load protection device 440, and more particularly the control unit 458, is configured to select, and optionally to change, the time-current trip characteristic that it implements depending on the electrical load, and in particular the variable electrical load, that the load protection device is connected to in use, and is intended to protect. In the present context, the load is primarily provided by the electrical equipment (not shown) connected to the supply points 120, 220, 320, which may for example comprise household appliances and installations such as TVs, electric showers, electric heaters, kettles and so on. The supply point load is variable since it depends on how many accommodation units 116, 216, 316 are occupied at any given time, or over any given period, and on which electrical appliances/installations are in use. The components of the RLM infrastructure itself may also contribute to the load, but this element of the load tends not to be variable.

Advantageously, the load protection device 440 monitors the load to which it is connected and determines a load profile based on the measured load. The load profile comprises data indicating one or more characteristics of the load being monitored by the device 440. For example, the load profile may at least comprise a maximum load value equal to or otherwise based on the maximum load measured by the device 440. The load profile does comprise data indicating how the load varies over one or more periods of time (e.g. one or more period of hours, and/or one or more period of days, and/or one or more period of weeks, and/or one or more period of months). For the, or each, period, the load profile includes at least one representative load value, typically a respective maximum load value, conveniently taken from or derived from the load measurements made by the device 440. This value may be said to represent the maximum expected load for the respective period, based on the measured load. For example, the maximum load value used in the load profile in respect of any given period may be equal to a maximum load the device actually measured in respective of the same period, or the actual measured value plus a margin (the size of which depends on how sensitive the device is desired to be), and/or may be based on an average or other combination of the actual measured value for the time period and one or more other actual measured load values, e.g. measured values for one or more adjacent time periods and/or one or more historical measured values for the same time period.

Conveniently, the load protection device 440 monitors the load by measuring load current, which in preferred embodiments may be achieved using the current measured by current sensor 454, but which may alternatively be measured using any other suitably located current sensor(s). Accordingly, load current may be used as a measure of load and so may be used to create the load profile, i.e. the load profile may contain load current values as the load metric. In alternative embodiments, power (e.g. real or apparent power) may be used as the load metric, in which case the load profile may contain corresponding power values.

In preferred embodiment, the control unit 458 is programmed to create the load profile by measuring load current (or power as applicable) and to store the load profile in memory 462. The control unit 458 may be configured to update the load profile as required (e.g. continuously or periodically) in response to ongoing monitoring of the load. Creating and updating the load profile may be performed using any convenient technique, e.g. by simply recording and optionally updating, a maximum or representative load current, or power, value for the, or each, period, or by any suitable conventional machine learning technique.

Alternatively or in addition, the load profile may be created and/or updated using data other than measured load data, for example load-related data received by the load protection device 440 from an external device or system via the communications unit 468 and/or via the device user interface 466. Such data may include predicted load data, for example based on the time of year, a holiday period or an otherwise unexpected event, or climate/weather data.

The preferred load protection device 440 selects, or creates, a time-current trip characteristic to implement depending on the load profile, i.e. to match the load profile. Optionally, the device 440 may subsequently change the time-current trip characteristic being implemented (e.g. either by replacing it with another one or adjusting it) depending on the load profile. Any such changes may be made as a matter of routine to match the load profile, and/or in response to any updating of the load profile that may occur.

For example, the load profile may simply comprise the maximum load current (or power) valve derived from the measurements of the device 440 over a given period (e.g. a day, a week, a month or a year). The device 440 selects a time-current trip characteristic to suit the maximum measured load value. Subsequently, the maximum measured load may change (e.g. because the occupancy level of the building has changed or the season has changed) and the load profile is updated accordingly. In response, the device 440 changes the time-current trip characteristic to match the updated load profile. In another example, the load profile specifies a respective representative (e.g. maximum load current) load value for each of a plurality of time periods (e.g. day and night, and/or the month of the year). During each corresponding period in use, the device 440 uses a time-current trip characteristic that matches the representative load value for that period. This may involve changing the implemented time-current trip characteristic from period to period to match the load profile. Matching the time-current trip characteristic to the load profile may involve using a trip characteristic with a minimmum current level threshold value equal to, or higher than by a suitable margin, the relevant maximum measured load current, or otherwise based on the load measure included in the profile. In the present context therefore, matching does not imply that the values used in the trip characteristic must be identical to the corresponding measured load current values; instead the former should correspond with, or be based on, the latter to the extent that suitable load protection is provided.

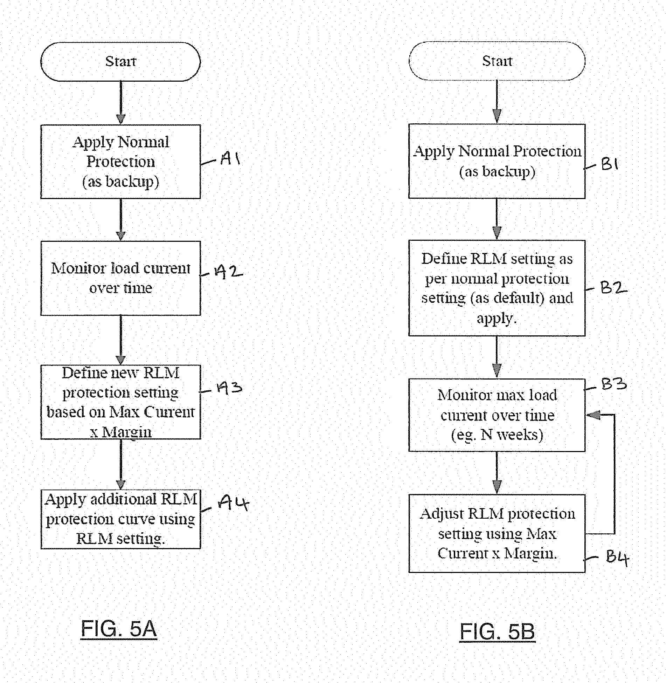

Further examples are provided with reference to Figures 5A to 5D which show flow charts illustrating how the device 440 may operate to select and adjust the time-current trip characteristic implemented. In each of Figures 5A to 5D it is assumed that, initially, the device 440 implements a default time-current trip characteristic (A1, B1, C1, D1). In Figure 5A, the device 440 monitors load current over a period of time (A2), preferably at least over a period of hours, more preferably days or weeks, to create a load profile. The device 440 then creates or selects a new time-current trip characteristic based on the load profile (A3), and causes the new time-current trip characteristic to be implemented (A4). The new time-current trip characteristic may simply be based on the maximum load measured during the monitoring period, e.g. equal to the maximum measured load plus a suitable margin.

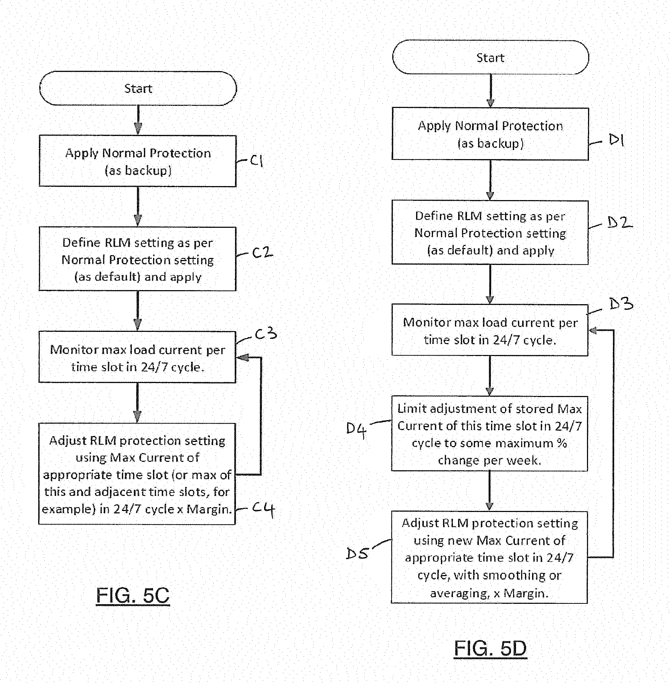

In the examples of Figures 5B and 5C, the device 440 selects an initial time-current trip characteristic (B2, C2) and then monitors load current over a period of time (B3, C3) to create a load profile. The device 440 then changes the time-current trip characteristic based on the load profile, and causes the changed time-current trip characteristic to be implemented (B4, C4). The time-current trip characteristic may changed based on the maximum load measured during the monitoring period, e.g. equal to the maximum measured load plus a suitable margin. In both Figure 5B and 5C, the steps B3, B4, C3, C4 are repeated in cycles so that the time-current trip characteristic may be updated periodically. In the case of Figure 5B, the period of monitoring and updated is assumed to be one or more weeks. In the case of Figure 5C, the monitoring and updating cycle is assumed to be less that one day.

The example of Figure 5D is similar to the examples of Figures 5B and 5C with the exception that a smoothing, or restraining, function D5 is implemented to limit the amount by which the time-current trip characteristic is changed from cycle to cycle, e.g. to a suitable percentage of any detected change in the maximum load current. This approach limits any undue influence from noise or 'outliers' - possibly even the onset of a fault. Any conventional smoothing function may be used, e.g. an averaging window, Finite Impulse Response filter or Infinite Impulse Response filter.

It will be apparent that the device 440 is able to provide more suitable, and adaptable, protection for the load. Advantageously, the load protection device 440 may be used in place of an HRC fuse to provide better protection the RLM 112, 212, 312. In particular the device 440 provides protection that is more appropriate for the building load demand, and operates faster in the event of a fault incident. This will reduce the energy supplied into the fault, reducing the arc flash hazard. The applied protection is adaptable, for example adapting seasonally for electrical heating in the winter or air conditioning in the summer, if required.

Load protection devices 440 embodying the invention may support the implementation of one or more custom time-current trip characteristics, and/or may support the implementation of one or more time-current trip characteristics that emulate a respective standard time-current fuse characteristic.

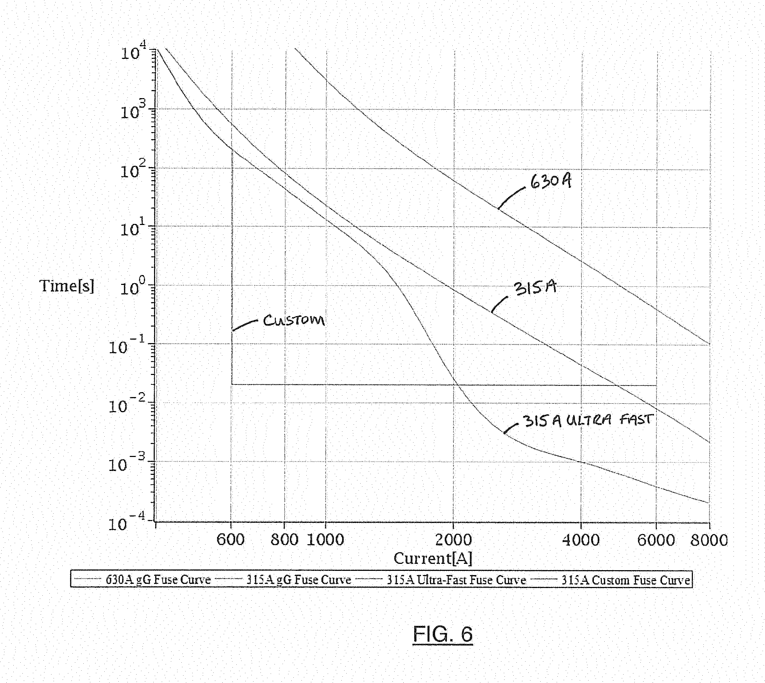

Figure 6 shows, by way of example, four time-current fuse characteristics: a standard 630 A fuse characteristic; a standard 315 A fuse characteristic; a standard 315 A ultra-fast fuse characteristic; and a 315 A custom fuse characteristic with high-set.

In addition to emulating any of the above time-current fuse characteristics (or implementing any other time-current trip characteristics), the device 440 can incorporate a high-set type response to further protect against fault energy being released in the RLM, as demonstrated by the custom fuse curve of Figure 6.

By way of example, in response to an arcing fault with a current level of, say, 2000 A, a standard 315 A BS88 gG fuse (which are common in RLM installations), takes around 1 second to isolate the fault in accordance with its standard time-current fuse characteristic. This delay allows a significant amount of energy to be dissipated by an arc, generating very high local temperatures. While this may be an acceptable level of energy for an underground LV cable, in a RLM setting where there may be combustible material nearby, this characteristic is inappropriate.

In contrast, the device 440, in accordance with a determined load profile, may select to implement a more appropriate trip characteristic, e.g. a characteristic emulating a standard 315 A ultra-fast fuse characteristic, or the custom 315 fuse characteristic. As a result, the fault response implemented by the device 440 is improved by decreasing the energy let-through below that of the standard BS88 gG fuse characteristic for large fault currents.

In preferred embodiments, the load protection device 440 is configured to operate the circuit breaker 444, and in particular to open the circuit breaker 444, in accordance with one or more current-step trip characteristics. This may be implemented in addition to the time-current trip characteristics discussed above. In contrast to the time-current trip characteristics, when implementing a step-current trip characteristic which is based on absolute current levels, the device 444 is responsive to relative changes, or step changes, in load current. The, or each, current-step trip characteristic defines at least one current step having a respective magnitude. The device 440 is configured to open the circuit breaker 444 upon detection of a step increase in load current above the step magnitude.

A step increase may be defined in any convenient way, for example being an increase within a given period of time. This period may be short, e.g. less than one second, or less than one tenth of a second (e.g. within a few (e.g. up to 10) cycles of the power supply). However, no matter what specific method is used to measure step increases in load, there is some minimum time between discrete step changes that can be reliably distinguished (a minimum discrimination time'). Step events closer in time than this will sometimes appear as one event. Since most loads operate independently of each other and due to the random nature of the time of each step there is always the possibility of two or more loads switching on arbitrarily close to each other. To allow for both the limitation of the measuring method and the random behaviour of the steps, the time period for detecting current steps may be longer than indicated above, and the device 440 may take into account the sum of all step increases detected within the time period when implementing the current-step trip characteristic, i.e. a detected step increase that causes the device 440 to open the circuit breaker may be an accumulation of more than one actual step increase in the load.

The, or each, current-step may be associated with one or more respective time period in which the device 440 is to be responsive to detection of corresponding step increases in the load current. For example, a current-step may be associated with a night time period, or a day time period. The magnitude of each current-step may be selected depending on the expected load, particularly in respect of the time period associated with the current-step.

Optionally, the current-step trip characteristic, and in particular the magnitude of the current-step(s) is adjustable, for example in the same or similar manner described above in relation to the time-current trip characteristic, e.g. in response to determination of and/or changes in the load profile. For example, by monitoring the size of the actual step increases in load over a suitable period of time (e.g. daily, weekly and/or according to season), a suitable value for the magnitude of a current-step for the trip characteristic can be determined, e.g. being equal to the actual maximum step detected in the period, preferably plus a margin or otherwise derived from it. The measured step increases may be included in the load profile, and may be updated as required.

By way of example, in cases where the device 440 protects a network, e.g. an RLM, supplying several consumers, each of which has a range of loads in use at various times, the total load may fluctuate over a large range but the changes will be made up of many small step changes as loads switch in and out. For example, the maximum total morning load of a feeder supplying a block of flats might reach 250 A when many showers, kettles and toasters are all on at once, but the largest step increase will probably be around 40 A as a 10 kW power shower is switched on. While it is very likely that two such loads may be switched on almost at the same time by chance, the probability of, say, five such loads being connected within a power cycle of each other is very small. Therefore, the sudden appearance of a fault of 200 A is noticeable because it is one large step, not many small ones. If a current-step trip characteristic with a step magnitude of 200 A is being implemented, this step is identified as fault even if the total (absolute) current level flowing at the time of the fault is lower than the maximum total (absolute) current that is typically present on the circuit at that time (in which case the device 440 would not otherwise have tripped the circuit breaker 444 if it were only implementing a time-current trip characteristic).

Although the load protection device 440 is described herein in the context of an RLM, it will be understood that it may be used to protect any other electrical load, e.g. any part of an LV electrical supply network, in general being connected between an AC load and an AC supply.

## Claims

1. An electrical load protection device (440) connectable between an electrical load and an electrical supply, the device comprising:
a circuit breaker (444) operable between a closed state in which the load is connected to the supply, and an open state in which the load is disconnected from the supply;
a current sensor (454) for measuring current drawn by the load from the supply;
a control unit (458) configured to control the operation of the circuit breaker depending on the measured current in accordance with a trip characteristic,
**characterised in that** the device is configured to maintain a load profile comprising data indicating how the load varies over one or more periods of time, and wherein said trip characteristic is determined by said load profile.

2. The device of claim 1, wherein said device is configured to select or create an initial trip characteristic to match said load profile.

3. The device of claim 1 or 2, wherein said device is configured to change said trip characteristic to match said load profile, said device preferably being configured to change said trip characteristic to match changes in load indicated in said load profile.

4. The device of any preceding claim, wherein said device is configured to update said load profile using said measured load, and to change said trip characteristic to match the updated load profile.

5. The device of any preceding claim, wherein said trip characteristic comprises a time-current trip characteristic specifying at least one current threshold value, said control unit being configured to cause said circuit breaker to open in response to the measured load current exceeding the at least one current threshold value, and wherein said load profile typically comprises at least one representative load value, preferably at least one representative load value derived from measured load current.

6. The device of claim 5, wherein said load profile comprises a respective representative load value for each of a plurality of time periods.

7. The device of claim 5 or 6, wherein said representative load value represents a maximum expected load, conveniently a maximum expected load current, and preferably a maximum expected load for a respective time period.

8. The device of any one of claims 5 to 7, wherein the respective representative load value is derived from a measured load current value for the respective time period, and/or from one or more measured load current value in respect of one or more other time period.

9. The device of any of claims 5 to 8, wherein said device is configured to select, create or change said trip characteristic to match said load profile by causing said at least one current threshold value to match a respective representative load value of the load profile.

10. The device of any preceding claim wherein said trip characteristic comprises a current-step trip characteristic that defines at least one current step having a respective magnitude, and wherein the control unit is configured to open the circuit breaker upon detection of a step increase in measured load current above the step magnitude, and wherein said load profile preferably comprises at least one current-step magnitude value derived from the measured load current, preferably a respective current-step magnitude value for each of a plurality of time periods.

11. The device of claim 10, wherein said current-step magnitude value represents a maximum expected current-step increase, preferably a maximum expected current-step increase for the respective time period.

12. The device of claim 10 or 11, wherein the respective current-step magnitude value is derived from one or more current step increases for the respective time period detected from said measured load current, and/or in respect of one or more other time period.

13. The device of any of claims 10 to 12, wherein said device is configured to select, create or change said trip characteristic to match said load profile by causing said at least one current-step magnitude value of the trip characteristic to match a respective current-step magnitude value of the load profile.

14. An electrical load protection method comprising:
measuring current drawn by an electrical load from an electrical supply;
controlling the operation of a circuit breaker depending on the measured current in accordance with a trip characteristic, the method being **characterised by**
maintaining a load profile comprising data indicating how the load varies over one or more periods of time; and
determining said trip characteristic based on said load profile.

15. An electrical power supply system comprising a Rising and Lateral Mains (RLM) installed in a building and connected to an AC electrical power supply, and at least one electrical load protection device connected between the RLM and the AC electrical power supply, wherein the, or each, electrical load protection device comprises a device as claimed in any of claims 1 to 13.

16. The device of any one of claims 1 to 13, wherein the load profile data is created and/or updated using measured load data or predicted load data.

## Patentansprüche

1. Schutzvorrichtung (440) für elektrische Last, die zwischen einer elektrischen Last und einer elektrischen Versorgung verbindbar ist, wobei die Vorrichtung umfasst:
einen Leistungsschalter (444), der zwischen einem geschlossenen Zustand, in dem die Last mit der Versorgung verbunden ist, und einem offenen Zustand, in dem die Last von der Versorgung getrennt ist, betreibbar ist;
einen Stromsensor (454) zum Messen des von der Last aus der Versorgung gezogenen Stroms;
eine Steuerungseinheit (458), die konfiguriert ist, um den Betrieb des Leistungsschalters in Abhängigkeit von dem gemessenen Strom gemäß einer Auslösecharakteristik zu steuern, **dadurch gekennzeichnet, dass** die Vorrichtung konfiguriert ist, um ein Lastprofil aufrechtzuerhalten, das Daten umfasst, die angeben, wie sich die Last über einen oder mehrere Zeiträume ändert, und wobei die Auslösecharakteristik durch das Lastprofil bestimmt wird.

2. Vorrichtung nach Anspruch 1, wobei die Vorrichtung konfiguriert ist, um eine anfängliche Auslösecharakteristik auszuwählen oder zu erzeugen, die mit dem Lastprofil übereinstimmt.

3. Vorrichtung nach Anspruch 1 oder 2, wobei die Vorrichtung konfiguriert ist, um die Auslösecharakteristik zu ändern, um mit dem Lastprofil übereinzustimmen, wobei die Vorrichtung vorzugsweise konfiguriert ist, um die Auslösecharakteristik zu ändern, um mit den in dem Lastprofil angegebenen Laständerungen übereinzustimmen.

4. Vorrichtung nach einem der vorhergehenden Ansprüche, wobei die Vorrichtung konfiguriert ist, um das Lastprofil unter Verwendung der gemessenen Last zu aktualisieren und die Auslösecharakteristik zu ändern, damit sie mit dem aktualisierten Lastprofil übereinstimmt.

5. Vorrichtung nach einem der vorhergehenden Ansprüche, wobei die Auslösecharakteristik eine Zeit-Strom-Auslösecharakteristik umfasst, die mindestens einen Stromschwellenwert spezifiziert, wobei die Steuerungseinheit konfiguriert ist, um das Öffnen des Leistungsschalters in Reaktion auf den gemessenen Laststrom, der den mindestens einen Stromschwellenwert überschreitet, zu veranlassen, und wobei das Lastprofil typischerweise mindestens einen repräsentativen Lastwert umfasst, vorzugsweise mindestens einen repräsentativen Lastwert, der aus dem gemessenen Laststrom abgeleitet ist.

6. Vorrichtung nach Anspruch 5, wobei das Lastprofil einen jeweiligen repräsentativen Lastwert für jeden einer Vielzahl von Zeiträumen umfasst.

7. Vorrichtung nach Anspruch 5 oder 6, wobei der repräsentative Lastwert eine maximal erwartete Last, geeigneterweise einen maximal erwarteten Laststrom und vorzugsweise eine maximal erwartete Last für eine entsprechende Zeitdauer darstellt.

8. Vorrichtung nach einem der Ansprüche 5 bis 7, wobei der jeweilige repräsentative Lastwert aus einem gemessenen Laststromwert für den jeweiligen Zeitraum und/oder aus einem oder mehreren gemessenen Laststromwerten in Bezug auf einen oder mehrere andere Zeiträume abgeleitet ist.

9. Vorrichtung nach einem der Ansprüche 5 bis 8, wobei die Vorrichtung konfiguriert ist, um die Auslösecharakteristik auszuwählen, zu erzeugen oder zu ändern, um mit dem Lastprofil übereinzustimmen, indem der mindestens eine Stromschwellenwert veranlasst wird, mit einem jeweiligen repräsentativen Lastwert des Lastprofils übereinzustimmen.

10. Vorrichtung nach einem der vorhergehenden Ansprüche, wobei die Auslösecharakteristik eine Stromschritt-Auslösecharakteristik umfasst, die
mindestens einen Stromschritt mit einer jeweiligen Größe definiert, und wobei die Steuerungseinheit konfiguriert ist, um den Leistungsschalter zu öffnen, beim Erkennen eines Schrittanstiegs des gemessenen Laststroms über die Schrittgröße erkannt wird, und wobei das Lastprofil vorzugsweise mindestens einen Stromschritt-Größenwert, der aus dem gemessenen Laststrom abgeleitet wird, umfasst, vorzugsweise einen jeweiligen Stromschritt-Größenwert für jeden einer Vielzahl von Zeiträumen.

11. Vorrichtung nach Anspruch 10, wobei der Stromschritt-Größenwert einen maximal erwarteten Stromschritt-Anstieg darstellt, vorzugsweise einen maximal erwarteten Stromschritt-Anstieg für den jeweiligen Zeitraum.

12. Vorrichtung nach Anspruch 10 oder 11, wobei der jeweilige Stromschritt-Größenwert aus einem oder mehreren Stromschritt-Anstiegen für den jeweiligen Zeitraum, der aus dem gemessenen Laststrom ermittelt wird, und/oder in Bezug auf einen oder mehrere andere Zeiträume abgeleitet wird.

13. Vorrichtung nach einem der Ansprüche 10 bis 12, wobei die Vorrichtung konfiguriert ist, um die Auslösecharakteristik auszuwählen, zu erzeugen oder zu ändern, um mit dem Lastprofil übereinzustimmen, indem der mindestens eine Stromschritt-Größenwert der Auslösecharakteristik veranlasst wird, mit einem entsprechenden Stromschritt-Größenwert des Lastprofils übereinzustimmen.

14. Schutzverfahren für elektrische Last, umfassend:
Messen von Strom, der von einer elektrischen Last aus einer elektrischen Versorgung gezogen wird;
Steuern des Betriebs eines Leistungsschalters in Abhängigkeit von dem gemessenen Strom gemäß einer Auslösecharakteristik, wobei das Verfahren **gekennzeichnet ist durch**
Aufrechterhalten eines Lastprofils, das Daten umfasst, die anzeigen, wie sich die Last über eine oder mehrere Zeiträume verändert; und
Bestimmen der Auslösecharakteristik basierend auf dem Lastprofil.

15. Stromversorgungssystem, das ein in einem Gebäude installiertes und an eine Wechselstromversorgung angeschlossenes Steig- und Seitennetz (RLM) und mindestens eine zwischen das RLM und die Wechselstromversorgung angeschlossene Schutzvorrichtung für elektrische Last umfasst, wobei die oder jede Schutzvorrichtung für elektrische Last eine Vorrichtung nach einem der Ansprüche 1 bis 13 umfasst.

16. Vorrichtung nach einem der Ansprüche 1 bis 13, wobei die Lastprofildaten unter Verwendung von gemessenen Lastdaten oder vorhergesagten Lastdaten erstellt und/oder aktualisiert werden.

## Revendications

1. Dispositif de protection de charge électrique (440) pouvant être connecté entre une charge électrique et une alimentation électrique, le dispositif comprenant :
un disjoncteur (444) pouvant fonctionner entre un état fermé dans lequel la charge est connectée à l'alimentation, et un état ouvert dans lequel la charge est déconnectée de l'alimentation ;
un capteur de courant (454) pour mesurer le courant tiré par la charge de l'alimentation ;
une unité de commande (458) configurée pour commander le fonctionnement du disjoncteur en fonction du courant mesuré selon une caractéristique de déclenchement,
**caractérisé en ce que** le dispositif est configuré pour maintenir un profil de charge comprenant des données indiquant comment la charge varie sur une ou plusieurs périodes de temps, et dans lequel ladite caractéristique de déclenchement est déterminée par ledit profil de charge.

2. Dispositif selon la revendication 1, dans lequel ledit dispositif est configuré pour sélectionner ou créer une caractéristique de déclenchement initiale pour correspondre audit profil de charge.

3. Dispositif selon la revendication 1 ou 2, dans lequel ledit dispositif est configuré pour modifier ladite caractéristique de déclenchement pour correspondre audit profil de charge, ledit dispositif étant de préférence configuré pour modifier ladite caractéristique de déclenchement pour correspondre aux changements de charge indiqués dans ledit profil de charge.

4. Dispositif selon une quelconque revendication précédente, dans lequel ledit dispositif est configuré pour mettre à jour ledit profil de charge à l'aide de ladite charge mesurée, et pour modifier ladite caractéristique de déclenchement pour correspondre au profil de charge mis à jour.

5. Dispositif selon une quelconque revendication précédente, dans lequel ladite caractéristique de déclenchement comprend une caractéristique de déclenchement temps-courant spécifiant au moins une valeur seuil de courant, ladite unité de commande étant configurée pour amener ledit disjoncteur à s'ouvrir en réponse au courant de charge mesuré dépassant l'au moins une valeur seuil de courant, et dans lequel ledit profil de charge comprend typiquement au moins une valeur de charge représentative, de préférence au moins une valeur de charge représentative dérivée du courant de charge mesuré.

6. Dispositif selon la revendication 5, dans lequel ledit profil de charge comprend une valeur de charge représentative respective pour chacune d'une pluralité de périodes de temps.

7. Dispositif selon la revendication 5 ou 6, dans lequel ladite valeur de charge représentative représente une charge attendue maximale, commodément un courant de charge attendu maximal, et de préférence une charge attendue maximale pour une période de temps respective.

8. Dispositif selon l'une quelconque des revendications 5 à 7, dans lequel la valeur de charge représentative respective est dérivée d'une valeur de courant de charge mesurée pour la période de temps respective, et/ou d'une ou de plusieurs valeurs de courant de charge mesurées par rapport à une ou plusieurs autres périodes de temps.

9. Dispositif selon l'une quelconque des revendications 5 à 8, dans lequel ledit dispositif est configuré pour sélectionner, créer ou modifier ladite caractéristique de déclenchement pour correspondre audit profil de charge en amenant ladite au moins une valeur seuil de courant à correspondre à une valeur de charge représentative respective du profil de charge.

10. Dispositif selon une quelconque revendication précédente, dans lequel ladite caractéristique de déclenchement comprend une caractéristique de déclenchement d'échelon de courant qui définit au moins un échelon de courant ayant une amplitude respective, et dans lequel l'unité de commande est configurée pour ouvrir le disjoncteur lors de la détection d'une augmentation d'échelon de courant de charge mesuré au-dessus de l'amplitude d'échelon, et dans lequel ledit profil de charge comprend de préférence au moins une valeur d'amplitude d'échelon de courant dérivée du courant de charge mesuré, de préférence une valeur d'amplitude d'échelon de courant respective pour chacune d'une pluralité de périodes de temps.

11. Dispositif selon la revendication 10, dans lequel ladite valeur d'amplitude d'échelon de courant représente une augmentation d'échelon de courant attendue maximale, de préférence une augmentation d'échelon de courant attendue maximale pour la période de temps respective.

12. Dispositif selon la revendication 10 ou 11, dans lequel la valeur d'amplitude d'échelon de courant respective est dérivée d'une ou de plusieurs augmentations d'échelon de courant pour la période de temps respective détectée à partir dudit courant de charge mesuré, et/ou par rapport à une ou plusieurs autres périodes de temps.

13. Dispositif selon l'une quelconque des revendications 10 à 12, dans lequel ledit dispositif est configuré pour sélectionner, créer ou modifier ladite caractéristique de déclenchement pour correspondre audit profil de charge en amenant ladite au moins une valeur d'amplitude d'échelon de courant de la caractéristique de déclenchement à correspondre à une valeur d'amplitude d'échelon de courant respective du profil de charge.

14. Procédé de protection de charge électrique comprenant :
la mesure du courant tiré par une charge électrique à partir d'une alimentation électrique ;
la commande du fonctionnement d'un disjoncteur selon le courant mesuré en fonction d'une caractéristique de déclenchement, le procédé étant **caractérisé par**
le maintien d'un profil de charge comprenant des données indiquant comment la charge varie sur une ou plusieurs périodes de temps ; et
la détermination de ladite caractéristique de déclenchement sur la base dudit profil de charge.

15. Système d'alimentation électrique comprenant un réseau montant et latéral (RLM) installé dans un bâtiment et connecté à une alimentation électrique en courant alternatif, et au moins un dispositif de protection de charge électrique connecté entre le RLM et l'alimentation électrique en courant alternatif, dans lequel le, ou chaque, dispositif de protection de charge électrique comprend un dispositif selon l'une quelconque des revendications 1 à 13.

16. Dispositif selon l'une quelconque des revendications 1 à 13, dans lequel les données de profil de charge sont créées et/ou mises à jour à l'aide de données de charge mesurées ou de données de charge prédites.
